(19) **Europäisches Patentamt / European Patent Office / Office européen des brevets**

(11) **EP 1 861 756 B1**

(12) **FASCICULE DE BREVET EUROPEEN**

(45) Date de publication et mention de la délivrance du brevet:
**15.12.2010 Bulletin 2010/50**

(21) Numéro de dépôt: **06726133.9**

(22) Date de dépôt: **23.03.2006**

(51) Int Cl.:
**G05D 1/02** (2006.01)

(86) Numéro de dépôt international:
**PCT/FR2006/000637**

(87) Numéro de publication internationale:
**WO 2006/100386 (28.09.2006 Gazette 2006/39)**

(54) **PROCEDE DE GUIDAGE D'UN ROBOT ET DISPOSITIF CORRESPONDANT**

VERFAHREN ZUM LENKEN EINES ROBOTERS UND ENTSPRECHENDE EINRICHTUNG

METHOD FOR GUIDING A ROBOT AND CORRESPONDING DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.03.2005 FR 0502863**

(43) Date de publication de la demande:
**05.12.2007 Bulletin 2007/49**

(73) Titulaire: **CENTRE NATIONAL D'ETUDES SPATIALES**
**75001 Paris (FR)**

(72) Inventeur: **DELAIL, Marius**
**F-31450 Odars (FR)**

(74) Mandataire: **Colas, Jean-Pierre**
**Cabinet JP COLAS**
**58 Rue de Châteaudun**
**75009 Paris (FR)**

(56) Documents cités:
**EP-A- 1 217 487       EP-A- 1 362 758**
**FR-A- 2 555 624       FR-A- 2 770 672**

**Description**

La présente invention se rapporte à un procédé de guidage d'un robot et à un dispositif correspondant.

On connaît de la technique antérieure divers procédés pour guider les robots, et notamment les procédés dans lesquels, préalablement à une mission du robot, on installe des balises sur le terrain où doit évoluer ce robot, et on utilise ensuite ces balises pour localiser et guider le robot.

Un tel procédé est connu notamment du document EP 1 217 487, qui enseigne un procédé de guidage d'un robot tel qu'une tondeuse à gazon sur un terrain de grande dimension tel qu'un terrain de golf.

Dans le procédé selon ce document antérieur, il est nécessaire, au préalable, d'équiper le terrain d'une série de balises ; à partir de la connaissance de la position de ces balises, on peut ensuite étalonner des moyens de guidage du robot afin de le guider correctement, c'est-à-dire en respectant les contraintes du terrain (obstacles, plans d'eau, etc.).

Comme on peut le comprendre, un tel procédé suppose donc que le robot évolue sur un terrain ayant subi un balisage réalisé avant que le robot n'entre en action.

La présente invention a pour but de s'affranchir de cette contrainte.

On atteint ce but de l'invention avec un procédé comprenant les étapes consistant à :

- a) poser dans ladite zone de travail une première balise par rapport à laquelle ledit robot peut se repérer,
- b) faire avancer ledit robot dans ladite zone de travail à partir de ladite première balise,
- c) lorsque ledit robot atteint une région de ladite zone de travail où il est susceptible de perdre la visibilité de ladite première balise, lui faire déposer dans cette région une deuxième balise par rapport à laquelle il peut également se repérer,
- d) déterminer et mémoriser la position de ladite deuxième balise par rapport à ladite première balise,
- e) faire avancer ledit robot dans ladite zone de travail à partir de ladite deuxième balise, et à
- f) utiliser ensuite la position mémorisée à l'étape d) pour déduire, de la position dudit robot par rapport à ladite deuxième balise, sa position par rapport à ladite première balise.

Grâce à ces caractéristiques, le procédé de guidage selon l'invention est extrêmement avantageux étant donné qu'il ne nécessite aucun balisage préalable à l'arrivée du robot dans la zone de travail.

Ce balisage est effectué par le robot lui-même, soit de manière autonome à partir de consignes de mouvement prédéterminées, soit sous la commande d'un opérateur distant.

En d'autres termes, le robot instrumente lui-même son environnement, et la première activité du robot au cours de ses déplacements est de fabriquer le système de référence qui va lui permettre d'étalonner lui-même sa zone de travail, puis de se localiser dans cette zone.

Suivant d'autres caractéristiques optionnelles du procédé selon l'invention :

- on prévoit au moins autant de balises qu'il est nécessaire pour couvrir l'intégralité de ladite zone de travail, et on reproduit les étapes c) à e) autant de fois qu'il est nécessaire pour permettre audit robot de se repérer dans l'intégralité de ladite zone de travail,
- on utilise seulement deux balises, et on impose audit robot de revenir chercher la balise précédente chaque fois qu'il a déposé la balise subséquente,
- on fait déposer ladite première balise par ledit robot,
- on laisse ledit robot déterminer lui-même les positions de dépôt de nouvelles balises, en fonction de la visibilité de balises déjà posées,
- on impose audit robot les positions de dépôt de nouvelles balises,
- on fournit audit robot des consignes de déplacement entre les points de dépôt desdites balises,
- on détermine la position dudit robot par rapport auxdites balises à partir de la connaissance du cap de ce robot, de son angle de visée de ces balises, et de sa distance par rapport à ces balises,
- on détermine la position d'une balise subséquente par rapport à une balise précédente à partir d'une part de la position dudit robot par rapport à ladite balise précédente, et d'autre part du cap dudit robot, au moment où ce robot dépose ladite balise subséquente,
- on utilise le balisage effectué par ledit robot pour guider d'autres robots.

La présente invention se rapporte également à un dispositif pour la mise en oeuvre d'un procédé conforme à ce qui précède, tel que défini par la revendication 11.

Suivant d'autres caractéristiques optionnelles de ce dispositif :

- lesdites balises sont passives,
- lesdites balises sont du type à réflecteur,

- lesdites balises sont actives,
- lesdites balises sont du type trois points,
- les moyens c) pour repérer ledit robot par rapport auxdites balises comprennent des moyens de mesure du cap dudit robot, des moyens de mesure de l'angle de visée desdites balises, et des moyens de mesure de la distance dudit robot par rapport auxdites balises,
- lesdits moyens d) pour déterminer les positions relatives desdites balises comprennent des moyens de mesure du cap dudit robot,
- lesdits moyens b) de transport et de dépose de balises sont du type à barillet.

D'autres caractéristiques et avantages de la présente invention apparaîtront à la lecture de la description qui va suivre et à l'examen des figures annexées, dans lesquelles :

- la figure 1A représente une vue schématique d'un robot adapté pour mettre en oeuvre le procédé selon l'invention,
- la figure 1B est analogue à la figure 1A, et concerne une variante du robot représenté à la figure 1A,
- la figure 2 est un schéma illustrant la manière dont on détermine la position du robot par rapport à un référentiel de référence,
- la figure 3 est un schéma illustrant la manière dont on détermine les positions relatives de balises,
- la figure 4 est un schéma illustrant la manière dont le robot selon l'invention peut se déplacer dans une zone de travail, et
- la figure 5 est un schéma illustrant la mise en oeuvre d'un autre type de balises.

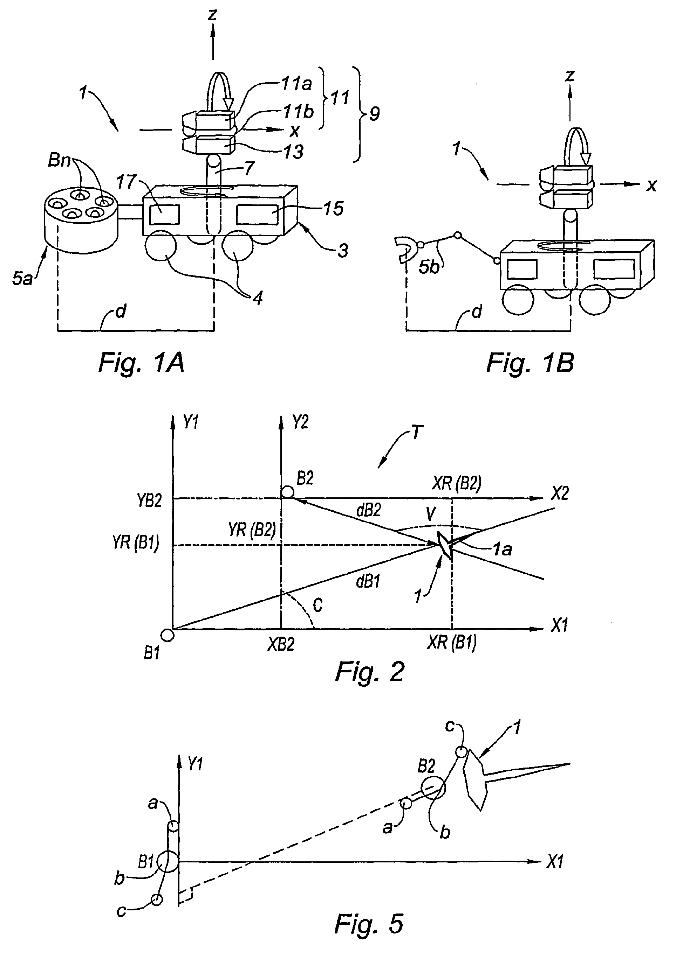

On se reporte à présent à la figure 1A, sur laquelle on voit que, selon un mode de réalisation possible, le robot 1 permettant de mettre en oeuvre le procédé selon l'invention comprend un châssis 3 monté par exemple sur des roues 4 dont certaines au moins sont motrices et directrices.

Un barillet 5a ou autre dispositif analogue est relié au châssis 3 de manière à pouvoir transporter et déposer des balises Bn.

Sur le châssis 3 est montée une tourelle 7 montée rotative autour d'un axe sensiblement vertical Z, supportant elle-même un bloc 9 comportant un système 11 de visée de balises, et un système 13 de mesure de distance de balises.

Lorsque les balises sont passives et du type à cible réfléchissante, le système 11 de visée peut comprendre, typiquement, une caméra 11a (éventuellement à infra-rouge) et un pointeur laser 11 b (ou tout autre illuminateur).

Le système 13 de mesure de distance peut comprendre un télémètre laser, un sonar ou tout autre moyen équivalent.

Le bloc 9 est monté rotatif autour d'un axe sensiblement horizontal X par rapport à la tourelle 7.

L'ensemble des moyens qui viennent d'être décrits sont actionnés par des moteurs électriques eux-mêmes commandés par un superviseur électronique 15, comme cela est classique dans le domaine technique des robots.

Ce superviseur électronique peut comprendre des mémoires dont certaines sont utilisées pour enregistrer des informations, et notamment des positions relatives de balises (voir ci-après), et dont d'autres peuvent être utilisées pour recevoir des programmes de fonctionnement, et notamment des consignes de mouvement (voir ci-après).

En variante, le superviseur 15 peut également être interfacé avec des moyens de communication permettant à un opérateur d'envoyer au robot 1 des instructions spécifiques pendant sont fonctionnement : par exemple, un ordre de dépôt d'une balise à un endroit prédéterminé.

On peut aussi envisager, en option, que le superviseur 15 soit interfacé avec des capteurs tels que des détecteurs d'obstacles, des appareils de mesure de l'inclinaison du sol, etc.

De préférence, le robot 1 est également équipé de moyens 17 connus en soi permettant de connaître à chaque instant son cap, tels que des moyens gyroscopiques ou des moyens de boussole électronique.

Ces moyens sont également interfacés avec le superviseur 15.

Dans la variante représentée à la figure 1B, le robot 1 comprend, à la place du barillet 5a, un bras manipulateur 5b permettant de transporter, de déposer et de récupérer des balises dans une zone de travail.

Bien entendu, dans ce cas, le robot 1 comprend également des moyens (non représentés) permettant de stocker des balises.

On va à présent décrire la manière dont le robot 1 va procéder pour pouvoir se repérer dans une zone dite « de travail », c'est-à-dire une zone où il doit remplir une certaine mission.

A titre d'exemple, une telle mission peut consister à surveiller un local industriel au moyen d'une caméra vidéo, ou bien à prélever des cotes sur un terrain extérieur en vue d'établir une cartographie, etc.

On notera que la zone de travail n'est pas nécessairement terrestre, et que les enseignements de la présente invention peuvent notamment être appliqués au domaine spatial.

On se reporte à la figure 2, sur laquelle on a représenté le robot 1 vu de dessus lorsqu'il se déplace dans une zone de travail T où se trouvent déjà deux balises B1 et B2.

La pointe 1a du robot 1 représente l'orientation de son châssis, c'est-à-dire en fait le cap suivi par le robot et le sens dans lequel il se déplace.

On supposera, pour les explications qui suivent, que l'extrémité de la pointe 1 a désigne l'emplacement du barillet 5a ou du bras 5b par rapport au châssis 3.

Le référentiel X1, Y1 a pour origine une balise de référence ou première balise B1, qui se trouve à l'endroit d'où part le robot 1.

L'orientation de l'axe X1 correspond à l'angle 0° tel qu'il est fourni par les moyens d'indication de cap 17 du robot 1 lorsqu'il se trouve à l'emplacement de la première balise B1, et l'axe Y1 est déterminé comme étant perpendiculaire à l'axe X1.

A partir de la balise B1, le robot 1 se déplace selon certaines consignes de mouvement imposées par le superviseur 15.

La position XR(B1), YR(B1) du robot 1 dans le référentiel X1, Y1 est connue à chaque instant : si, par exemple, le robot 1 suit un cap fixe à partir de la balise B1, comme cela est représenté sur la figure 2, cette position est donnée par :

$$XR(B1) = dB1 \cdot cosC,$$

$$YR(B1) = dB1 \cdot sinC,$$

où dB1 est la distance du robot 1 par rapport à la balise B1 (distance fournie par le système 13 de mesure de distance), et C est le cap suivi par le robot.

La balise B2 est placée de manière à pouvoir être vue par le robot 1 lorsque la visibilité de la balise B1 commence à être mauvaise.

Lorsque le robot 1 arrive dans le champ de la balise B2, il n'est plus possible de déterminer directement sa position dans le référentiel X1, Y1.

On commence donc par déterminer sa position XR(B2), YR(B2) dans le référentiel X2, Y2, dont l'origine est formée par la balise B2 et dont les axes X2, Y2 sont respectivement parallèles aux axes X1, Y1.

En examinant la figure 2, on voit que les coordonnées XR(B2), YR(B2) peuvent être calculées au moyen des deux formules suivantes :

$$XR(B2) = dB2 \cdot cos(180 - C - V), \qquad (1)$$

$$YR(B2) = dB2 \cdot sin(180 - C - V), \qquad (2)$$

où dB2 est la distance du robot 1 par rapport à la balise B2, C est le cap suivi par le robot et V est l'angle de visée de la balise B2 par le système 11 (voir figure 1), C et V étant exprimés en degrés centigrades.

Ensuite, pour déterminer la position XR(B1), YR(B1) du robot 1 dans le référentiel X1, Y1, on utilise de simples formules de translation :

$$XR(B1) = XR(B2) + XB2, \qquad (3)$$

$$YR(B1) = YR(B2) + YB2, \qquad (4)$$

où XB2, YB2 sont les coordonnées de la balise B2 dans le référentiel X1, Y1.

Nous allons maintenant préciser comment on détermine ces coordonnées.

En fait, alors que la balise B1 peut avoir été déposée manuellement par un opérateur à un emplacement déterminé de la zone de travail T, la balise B2 et les balises suivantes (non représentées) sont déposées par le robot 1 lui-même, au moyen du barillet 5a représenté sur la figure 1A ou du bras 5b représenté sur la figure 1B.

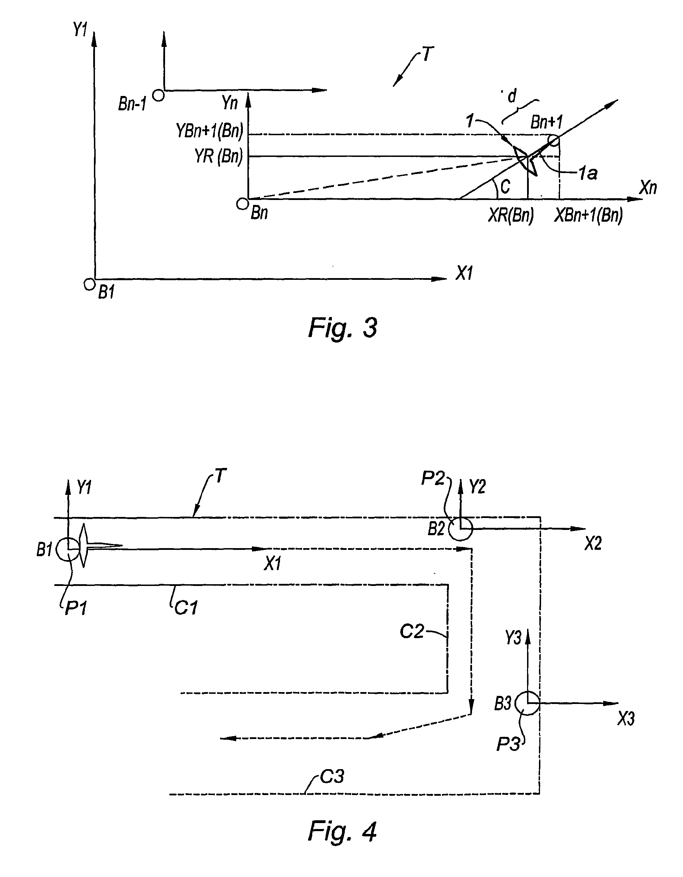

En se reportant à la figure 3, on voit que la position XBn+1(Bn), YBn+1(Bn) d'une balise Bn+1 dans le référentiel Xn, Yn d'une balise Bn peut être calculée de la manière suivante :

$$XBn+1(Bn) = XR_{dép}(Bn) + d \times \cos C, \qquad (5)$$

$$YBn+1(Bn = YR_{dép}(Bn) + d \times \sin C, \qquad (6)$$

où $XR_{dép}(Bn)$, $YR_{dép}(Bn)$ désignent les coordonnées du robot 1 dans le référentiel Xn, Yn au moment où il dépose la balise Bn+1 et d désigne la distance, fixe par construction, séparant le système de mesure de distance 13 du point où les balises sont déposées (voir figures 1A et 1B).

On peut ensuite ramener les coordonnées XBn+1 (Bn), YBn+1 (Bn) au référentiel de référence X1, Y1 par translations successives dans les référentiels Xn-1, Yn-1, Xn-2, Yn-2, etc., selon les principes indiqués plus haut.

Comme on peut donc le comprendre, chaque fois que le robot 1 dépose une balise Bn dans la zone de travail T, le superviseur 15 peut calculer la position de cette balise dans le référentiel de référence X1, Y1, et mémoriser cette position.

Ensuite, en repérant la position XR(Bn), YR(Bn) du robot 1 dans le référentiel Xn, Yn d'une balise Bn dont on connaît la position dans le référentiel X1, Y1, on peut, en appliquant des formules analogues aux formules (1) et (2) ci-dessus, calculer la position XR(B1), YR(B1) de ce robot dans le référentiel X1, Y1.

Comme on peut donc le comprendre à présent, le robot 1 va, dans un premier temps, se déplacer dans la zone de travail T selon des consignes de mouvement imposées par le superviseur 15, déposer lui-même des balises dans cette zone de travail, et mémoriser les positions de ces balises.

Les positions du robot et des balises sont toutes ramenées au référentiel commun X1, Y1, ce qui permet donc de repérer très facilement la position du robot dans la zone de travail.

Une fois que le balisage de la zone de travail T a été effectué par le robot 1 et que les positions des balises ont été mémorisées par ce robot, il peut remplir sa mission dans cette zone de travail.

Pour cela, il se repère (à partir de son cap, de l'angle de visée et de la distance) par rapport à chacune de ces balises au fur et à mesure qu'il progresse dans cette zone de travail et donc que certaines balises vont disparaître de son champ de vision tandis que d'autres balises vont se présenter dans ce champ.

On a représenté sur la figure 4 un exemple de déplacement du robot 1 pendant la phase de balisage d'une zone de travail T ayant sensiblement la forme d'un couloir en U.

On suppose que l'on a programmé dans la mémoire du robot 1 des consignes de mouvement lui ordonnant de tourner à droite quand ses capteurs lui indiquent qu'il n'y a plus d'obstacle à droite.

Le robot 1 part donc du point P1 où se trouve la balise B1, et se déplace en ligne droite dans le couloir C1, aidé par ses capteurs qui lui permettent de maintenir sa trajectoire à distance des deux murs formant le couloir C1.

Lorsqu'il arrive au point P2, situé à l'angle des couloirs C1 et C2, le robot 1 sait, par ses capteurs, qu'il n'y a plus d'obstacle à droite et donc qu'il va pouvoir tourner dans le couloir C2.

Toutefois, le robot 1 sait aussi que ce faisant, il va sortir du champ de visibilité de la balise B1.

Il dépose donc une balise B2 qui, tout en étant située dans le champ de visibilité de la balise B1, pourra être vue par le robot lorsqu'il se déplacera dans le couloir C2.

De même, le robot 1 déposera une balise B3 lorsqu'il arrivera au point P3, situé à l'angle des couloirs C2 et C3.

Une fois qu'il aura déposé les balises B1 à B3 dans les couloirs C1 à C3 et mémorisé les positions de ces balises dans le référentiel X1, Y1 de la première balise B1, le robot 1 pourra se déplacer aisément dans ces couloirs en se repérant par rapport à ces balises.

On remarquera que le balisage effectué par le robot 1 pourrait aussi être utilisé par un autre robot, ou même par une pluralité d'autres robots, prévus pour accomplir dans la zone de travail T des missions identiques, analogues ou différentes de celle du robot 1.

Dans une variante du procédé selon l'invention, nécessitant la mise en oeuvre d'un robot conforme à la figure 1A, on peut envisager de n'utiliser que deux balises.

Dans ce cas, après avoir déposé la deuxième balise B2 et mémorisé sa position, le robot 1 vient rechercher la première balise B1 en se repérant par rapport à la deuxième balise B2, et va positionner cette balise B1 en tant que troisième balise.

Le robot 1 vient ensuite rechercher la deuxième balise B2 en se repérant par rapport à la troisième balise, et va positionner cette balise B2 en tant que quatrième balise, et ainsi de suite.

Bien qu'elle présente l'avantage de ne nécessiter que deux balises, cette variante présente l'inconvénient de ne permettre de baliser qu'une petite partie de la zone de travail à un moment donné.

Une telle variante n'est donc intéressante que si le robot travaille seul et longuement dans cette petite partie de la zone de travail.

Dans encore une autre variante du procédé selon l'invention, on peut aussi envisager qu'au lieu que le robot décide lui-même des endroits où il doit déposer les balises, ce soit un opérateur distant qui déclenche les dépôts de balises par le robot.

Dans une variante du dispositif selon l'invention, on peut utiliser, en lieu et place de balises du type à cible réfléchissante, des balises du type « trois points », connues en soi.

De telles balises B1, B2 sont représentées à la figure 5.

Ces balises comprennent chacune trois points a, b, c disposés selon une géométrie connue.

Ainsi, en mesurant les angles sous lesquels le robot voit chacun de ces trois points, on peut déterminer la position du robot par une simple triangulation.

Il n'est dans ce cas plus nécessaire de prévoir de moyens de mesure de distance par rapport à la balise, ni même de moyens de mesure de cap.

Dans le cas d'une balise trois points active, les trois points a, b, c peuvent émettre un signal par exemple du type à infra-rouge.

Dans ce cas, les moyens de mesure d'angle de visée peuvent comprendre une simple caméra à infra-rouge.

Dans le cas d'une balise trois points passive, les trois points a, b, c peuvent consister en simples cibles réfléchissantes, auquel cas il faut alors prévoir sur le robot un système de mesure d'angle de visée du type à pointeur lumineux (voir ci-avant).

On notera toutefois que les balises du type trois points présentent l'inconvénient de nécessiter un positionnement angulaire très précis par rapport à un référentiel de référence X1, Y1.

Comme on peut à présent le comprendre à la lumière de ce qui précède, le procédé de guidage selon l'invention est extrêmement avantageux étant donné qu'il ne nécessite aucun balisage préalable à l'arrivée du robot dans la zone de travail.

Ce balisage est effectué par le robot lui-même, soit de manière autonome à partir de consignes de mouvement prédéterminées, soit sous la commande d'un opérateur distant.

En d'autres termes, le robot instrumente lui-même son environnement, et la première activité du robot au cours de ses déplacements est de fabriquer le système de référence qui va lui permettre d'étalonner lui-même sa zone de travail, puis de se localiser dans cette zone.

On peut ainsi faire évoluer le robot dans une zone de travail :

- inconnue non pénétrable (pas de plan a priori, zone non instrumentée) en mode autonome ou télécommandé,
- peu connue non pénétrable (existence d'un plan grossier a priori, zone non instrumentée), ou bien encore
- peu connue pénétrable (existence d'un plan grossier a priori, zone instrumentable).

Bien entendu, la présente invention n'est pas limitée aux modes de réalisation décrits et représentés, fournis à titre d'exemples illustratifs et non limitatifs.

**Revendications**

1. Procédé pour guider un robot (1) dans une zone de travail (T), comprenant les étapes consistant à :

- a) poser dans ladite zone de travail (T) une première balise (B1) par rapport à laquelle ledit robot (1) peut se repérer,
- b) faire avancer ledit robot (1) dans ladite zone de travail (T) à partir de ladite première balise (B1),
- c) lorsque ledit robot (1) atteint une région de ladite zone de travail (T) où il est susceptible de perdre la visibilité de ladite première balise (B1), lui faire déposer dans cette région une deuxième balise (B2) par rapport à laquelle il peut également se repérer, **caractérisé en ce qu'**il comporte les étapes consistant à :

- d) déterminer et mémoriser la position de ladite deuxième balise (B2) par rapport à ladite première balise (B1),
- e) faire avancer ledit robot dans ladite zone de travail (T) à partir de ladite deuxième balise (B2), et à
- f) utiliser ensuite la position mémorisée à l'étape d) pour déduire, de la position dudit robot (1) par rapport à ladite deuxième balise (B2), sa position par rapport à ladite première balise (B1).

2. Procédé selon la revendication 1, dans lequel on prévoit au moins autant de balises (B1...Bn) qu'il est nécessaire pour couvrir l'intégralité de ladite zone de travail (T), et on reproduit les étapes c) à e) autant de fois qu'il est nécessaire pour permettre audit robot (1) de se repérer dans l'intégralité de ladite zone de travail (T).

**3.** Procédé selon la revendication 1, dans lequel on utilise seulement deux balises (B1, B2), et on impose audit robot (1) de revenir chercher la balise précédente chaque fois qu'il a déposé la balise subséquente.

**4.** Procédé selon l'une quelconque des revendications précédentes, dans lequel on fait déposer ladite première balise (B1) par ledit robot (1).

**5.** Procédé selon l'une quelconque des revendications précédentes, dans lequel on laisse ledit robot (1) déterminer lui-même les positions de dépôt de nouvelles balises, en fonction de la visibilité de balises déjà posées.

**6.** Procédé selon l'une quelconque des revendications 1 à 4, dans lequel on impose audit robot (1) les positions de dépôt de nouvelles balises.

**7.** Procédé selon l'une quelconque des revendications précédentes, dans lequel on fournit audit robot (1) des consignes de déplacement entre les points de dépôt desdites balises (B1.....Bn).

**8.** Procédé selon l'une quelconque des revendications précédentes, dans lequel on détermine la position dudit robot (1) par rapport auxdites balises (B1.....Bn) à partir de la connaissance du cap (C) de ce robot (1), de son angle de visée (V) de ces balises (B1......Bn), et de sa distance (dB1.....dBn) par rapport à ces balises.

**9.** Procédé selon l'une quelconque des revendications précédentes, dans lequel on détermine la position d'une balise subséquente (Bn+1) par rapport à une balise précédente (Bn) à partir d'une part de la position dudit robot (1) par rapport à ladite balise précédente (Bn), et d'autre part du cap (C) dudit robot (1), au moment où ce robot (1) dépose ladite balise subséquente (Bn+1).

**10.** Procédé selon l'une quelconque des revendications précédentes, dans lequel on utilise le balisage effectué par ledit robot (1) pour guider d'autres robots.

**11.** Dispositif pour guider un robot (1) dans une zone de travail (T), comprenant:

a) ledit robot (1) comportant des moyens (5a ; 5b) pour transporter des balises (B1, ..., Bn), et des moyens (11, 13, 17) pour se repérer par rapport à ces balises,
b) une première balise (B1), destinée à être disposée dans la zone de travail (T), par rapport à laquelle ledit robot (1) peut se repérer,
c) des moyens (15) pour faire avancer ledit robot (1) dans ladite zone de travail (T) à partir de ladite première balise (B1) selon des consignes de mouvement,
d) une deuxième balise (B2), destinée à être disposée par ledit robot (1) dans la zone de travail (T), par rapport à laquelle ledit robot (1) peut également se repérer,
e) des moyens (15) pour faire déposer ladite deuxième balise (B2) par ledit robot (1), lorsque celui-ci atteint une région de ladite zone de travail (T) où il est susceptible de perdre la visibilité de ladite première balise (B1),

**caractérisé en ce que** ledit dispositif comporte :

f) des moyens (15) de détermination et de mémorisation de la position de ladite deuxième balise (B2) par rapport à ladite première balise (B1),
g) des moyens (15) pour faire avancer ledit robot (1) dans ladite zone de travail (T) à partir de ladite deuxième balise (B2), et
h) des moyens pour déduire, de la position dudit robot (1) par rapport à ladite deuxième balise (B2), sa position par rapport à ladite première balise (B1), à l'aide de la position déterminée et mémorisée de ladite deuxième balise (B2) par rapport à ladite première balise (B1).

**12.** Dispositif selon la revendication 11, dans lequel lesdites balises (B1......Bn) sont passives.

**13.** Dispositif selon la revendication 12, dans lequel lesdites balises (B1......Bn) sont du type à réflecteur.

**14.** Dispositif selon la revendication 11, dans lequel lesdites balises (B1......Bn) sont actives.

**15.** Dispositif selon la revendication 14, dans lequel lesdites balises (B1......Bn) sont du type trois points.

**EP 1 861 756 B1**

**16.** Dispositif selon l'une quelconque des revendications 11 à 14 pour la mise en oeuvre d'un procédé conforme à la revendication 8, dans lequel les moyens (11, 13, 17) pour repérer ledit robot (1) par rapport auxdites balises (B1, ..., Bn) comprennent des moyens (17) de mesure du cap dudit robot, des moyens (11) de mesure de l'angle de visée desdites balises, et des moyens (13) de mesure de la distance dudit robot (1) par rapport auxdites balises (B1, ..., Bn).

**17.** Dispositif selon l'une quelconque des revendications 11 à 15 pour la mise en oeuvre d'un procédé conforme à la revendication 9, dans lequel lesdits moyens (15) de détermination et de mémorisation de la position de ladite deuxième balise (B2) par rapport à ladite première balise (B1) comprennent des moyens de mesure du cap dudit robot.

**18.** Dispositif selon l'une quelconque des revendications 11 à 17, dans lequel lesdits moyens (5a ; 5b) pour transporter lesdites balises (B1, ..., Bn) sont du type à barillet (5a).

**Claims**

**1.** Process for guiding a robot (1) in a working zone (T) comprising phases consisting in:

- a) introducing a first marker (B1) into the said working zone (T) serving as a reference point for the said robot (1),
- b) advancing the said robot (1) into the said working zone (T) from the said first marker (B1),
- c) when the said robot (1) reaches an area in the said working zone (T), at which point it is likely to lose visibility of the said first marker (B1), introducing a second marker (B2) into this area also serving as a reference point, **characterised in that** it comprises the following phases consisting in:

- d) determining and memorising the position of the said second marker (B2) in relation to the first marker (B1),
- e) advancing the said robot (1) into the said working zone (T) from the said second marker (B2) and in
- f) then using the position memorised in stage d) to deduce, from the position of the said robot (1) in relation to the said second marker (B2), its position in relation to the said first marker (B1).

**2.** Process in accordance with Claim 1 above, in which a sufficient number of markers (B1 ... Bn) are provided to cover the entire working zone (T) and in which phases c) to e) are reproduced as often as necessary to permit the said robot (1) to have reference points throughout the entire working zone (T).

**3.** Process in accordance with Claim 1 above, in which only two markers (B1, B2) are used and the said robot (1) is required to come back and find the previous marker each time it puts down the subsequent marker.

**4.** Process in accordance with any of the above claims, in which the first marker (B1) is put down by the said robot (1).

**5.** Process in accordance with any of the above claims, in which the said robot (1) itself determines the positions at which the new markers are to be set down in relation to the visibility of the markers already in position.

**6.** Process in accordance with any of Claims 1 to 4 above, in which the positions at which the new markers are to be set down are dictated to the said robot (1).

**7.** Process in accordance with any of the above claims, in which instructions are given to the said robot (1) on how to move between the points at which the said markers (B 1 ... Bn) are set down.

**8.** Process in accordance with any of the above claims, in which the position of the said robot (1) is determined in relation to the other markers (B1 ... Bn) on the basis of knowing the course (C) of this robot, its angle of incidence (V) to these markers (B 1 ... Bn) and its distance (dB 1 ... dBn) in relation to these markers.

**9.** Process in accordance with any of the above claims, in which the position of a subsequent marker (Bn+1) is determined in relation to a previous marker (Bn) from firstly the position of the said robot (1) in relation to the said previous marker (Bn) and secondly from the course (C) of the said robot (1) at the moment at which this robot (1) sets down the said subsequent marker (Bn + 1).

**10.** Process in accordance with any of the above claims, in which the marker system effected by the said robot (1) is used in order to guide other robots.

**11.** Device for guiding a robot (1) in a working zone, comprising:

a) the said robot (1) comprising the means (5a, 5b) for transporting the markers (B1 ... Bn), and the means (11, 13, 17) of providing reference points in relation to these markers,

b) a first marker (B1), intended to be placed in the working zone (T) serving as a point of reference for the said robot (1),

c) means (15) for advancing the said robot (1) in the said working zone (T), from the said first marker (B1) in accordance with the movement instructions,

d) a second marker (B2) intended to be set down by the said robot (1), which also serves as a reference point for the said robot (1),

e) means (15), whereby the said robot (1) can set out the second marker when it reaches an area of the working zone (T) where it is likely to lose visibility of the first said marker, **characterised in that** this device comprises:

f) means (15) for determining and memorising the position of the said second marker (B2), in relation to the said first marker (B1),

g) means to advance the said robot (1) in the said working zone (T) from the said second marker (B2), and

h) means to calculate, from the position of the said robot 1 in relation to the said second marker (B2), its position in relation to the said first marker (B1), using the determined and memorised position of the said second marker (B2) in relation to the said first marker (B 1).

**12.** Device in accordance with Claim 11 above, in which the said markers (B1 ... Bn) are passive.

**13.** Device in accordance with Claim 12 above, in which the said markers (B1... Bn) are of the reflector type.

**14.** Device in accordance with Claim 11 above, in which the said markers (B 1 ... Bn) are active.

**15.** Device in accordance with Claim 14 above, in which the said markers B1 ... Bn) are of the three-point type.

**16.** Device in accordance with any of the Claims 11 to 14 above for the implementation of a process in accordance with Claim 8, in which the means (11, 13, 17) for providing a point of reference for the said robot (1) in relation to the said markers (B1 ... Bn) comprise the means (17) for measuring the course of the said robot, the means (11) for measuring the angle of incidence of the said markers and the means (13) for measuring the distance of the said robot in relation to the said markers (B1 ... Bn).

**17.** Device in accordance with any of the Claims 11 to 15 above for the implementation of a process in accordance with Claim 9, in which the said means (15) for determining and memorising the position of the said second marker (B2) in relation to the first said marker (B1) comprise means for measuring the course of the said robot.

**18.** Device in accordance with any of the Claims 11 to 17 above, in which the said means (5a, 5b) for transporting the said markers (B 1 ... Bn) are of the cylindrical type (5a).

**Patentansprüche**

**1.** Verfahren zur Steuerung eines Roboters (1) in einer Arbeitszone (T), wobei das Verfahren die folgenden Schritte aufweist:

a) Anordnen einer ersten Bake (B1) in der Arbeitszone (T), in Bezug auf welche sich der Roboter (1) orientieren kann,

b) Vorwärtsbewegen des Roboters (1) in der Arbeitszone (T) von der ersten Bake (B1) aus,

c) wenn der Roboter (1) einen Bereich der Arbeitszone (T) erreicht, in der er die Sicht auf die erste Bake (B1) verlieren kann, Veranlassen des Roboters in diesem Bereich eine zweite Bake (B2) zu positionieren anhand derer er sich ebenfalls orientieren kann,

**dadurch gekennzeichnet, dass** das Verfahren ferner die folgenden Schritte aufweist:

d) Bestimmen und Speichern der Position der zweiten Bake (B2) in Bezug auf die erste Bake (B1),

e) Vorwärtsbewegen des Roboters in der Arbeitszone (T) von der zweiten Bake (B2) aus, und

f) anschließendes Verwenden der im Schritt d) gespeicherten Position, um aus der Position des Roboters (1) in Bezug auf die zweite Bake (B2) seine Position in Bezug auf die erste Bake (B1) abzuleiten.

2.  Verfahren nach Anspruch 1, bei welchem mindestens so viele Baken (B1...Bn) vorgesehen werden, wie zum Abdecken der gesamten Arbeitszone (T) erforderlich sind, und die Schritte c) bis e) so oft wiederholt werden, wie es erforderlich ist, um es dem Roboter (1) zu ermöglichen, sich in der gesamten Arbeitszone (T) zu orientieren.

3.  Verfahren nach Anspruch 1, bei welchem nur zwei Baken (B1, B2) verwendet werden, und dem Roboter (1) auferlegt wird, die vorhergehende Bake nach jedem Setzen der nachfolgenden Bake zu holen.

4.  Verfahren nach einem der vorhergehenden Ansprüche, bei welchem die erste Bake (B1) durch den Roboter (1) gesetzt wird.

5.  Verfahren nach einem der vorhergehenden Ansprüche, bei welchem dem Roboter (1) überlassen wird, die Aufstellpositionen neuer Baken in Abhängigkeit von der Sichtbarkeit bereits positionierter Baken selbst zu bestimmen.

6.  Verfahren nach einem der Ansprüche 1 bis 4, bei welchem dem Roboter (1) die Austellpositionen für neue Baken vorgegeben werden.

7.  Verfahren nach einem der vorhergehenden Ansprüche, bei welchem dem Roboter (1) Anweisungen zum Bewegen zwischen den Positionen der Baken (B1....Bn) übermittelt werden.

8.  Verfahren nach einem der vorhergehenden Ansprüche, bei welchem die Position des Roboters (1) in Bezug auf die Baken (B1....Bn) ausgehend von der Kenntnis des Kurses (C) des Roboters (1), seines Sichtwinkels (V) in Bezug auf die Baken (B1..Bn) und seiner Entfernung (dB1...dBn) von den Baken bestimmt wird.

9.  Verfahren nach einem der vorhergehenden Ansprüche, bei welchem die Position einer nachfolgenden Bake (Bn+1) in Bezug auf eine vorhergehende Bake (Bn) einerseits anhand der Position des Roboters (1) in Bezug auf die vorhergehende Bake (Bn) und andererseits anhand des Kurses (C) des Roboters (1) zu dem Zeitpunkt, zu welchem der Roboter (1) die nachfolgende Bake (Bn+1) setzt, bestimmt wird.

10. Verfahren nach einem der vorhergehenden Ansprüche, bei welchem die von dem Roboter (1) durchgeführte Bebakung zum Steuern anderer Roboter verwendet wird.

11. Vorrichtung zum Steuern eines Roboters (1) in einer Arbeitszone (T), mit:

    a) einem Roboter (1), welcher Einrichtungen (5a; 5b) zum Transportieren von Baken (B1...Bn) und Einrichtungen (11, 13, 17) zur Orientierung anhand der Baken aufweist,
    b) einer zum Positionieren in der Arbeitszone (T) vorgesehenen ersten Bake (B1), anhand welcher sich der Roboter (1) orientieren kann,
    c) Einrichtungen (15) zum Vorwärtsbewegen des Roboters (1) in der Arbeitszone (T) von der ersten Bake (B1) aus entsprechend Bewegungsanweisungen,
    d) einer durch den Roboter (1) in der Arbeitszone (T) zu positionierenden zweiten Bake (B2) anhand welcher sich der Roboter (1) ebenfalls orientieren kann,
    e) Einrichtungen (15) zum Setzen der zweiten Bake (B2) durch den Roboter (1) bei Erreichen eines Bereichs der Arbeitszone (T), in welchem er die Sicht auf die erste Bake (B1) verlieren kann,

    **dadurch gekennzeichnet, dass** die Vorrichtung aufweist:

    f) Einrichtungen (15) zum Bestimmen und Speichern der Position der zweiten Bake (B2) in Bezug auf die erste Bake (B1),
    g) Einrichtungen (15) zum Vorwärtsbewegen des Roboters (1) in der Arbeitszone (T) von der zweiten Bake (B2) aus, und
    h) Einrichtungen, um aus der Position des Roboters (1) in Bezug auf die zweite Bake (B2) seine Position in Bezug auf die erste Bake (B1) mit Hilfe der bestimmten und gespeicherten Position der zweiten Bake (B2) in Bezug auf die erste Bake (B1) abzuleiten.

12. Vorrichtung nach Anspruch 11, bei welcher die Baken (B1...Bn) passiv sind.

**13.** Vorrichtung nach Anspruch 12, bei welcher die Baken (B1...Bn) vom Reflektortyp sind.

**14.** Vorrichtung nach Anspruch 11, bei welcher die Baken (B1...Bn) aktiv sind.

**15.** Vorrichtung nach Anspruch 14, bei welcher die Baken (B1...Bn) vom Dreipunkttyp sind.

**16.** Vorrichtung nach einem der Ansprüche 11 bis 14 zur Durchführung eines Verfahrens nach Anspruch 8, bei welcher die Einrichtungen (11, 13, 17) zum Ausrichten des Roboters (1) in Bezug auf die Baken (B1,...,Bn) Einrichtungen (17) zum Messen des Kurses des Roboters, Einrichtungen (11) zum Messen des Sichtwinkels der Baken und Einrichtungen (13) zum Messen der Entfernung des Roboters (1) von den Baken (B1,..., Bn) aufweisen.

**17.** Vorrichtung nach einem der Ansprüche 11 bis 15 zum Durchführen eines Verfahrens nach Anspruch 9, bei welchem die Einrichtungen (15) zum Bestimmen und Speichern der Position der zweiten Bake (B2) in Bezug auf die erste Bake (B1) Einrichtungen zum Messen des Kurses des Roboters aufweisen.

**18.** Vorrichtung nach einem der Ansprüche 11 bis 17, bei welcher die Einrichtungen (5a; 5b) zum Transportieren der Baken (B1,...,Bn) vom Typ einer Trommel (5a) sind.

Fig. 1A

Fig. 1B

Fig. 2

Fig. 5

Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1217487 A